# EUROPÄISCHE PATENTSCHRIFT

(11) **EP 2 247 516 B1**
(45) Veröffentlichungstag und Bekanntmachung des Hinweises auf die Patenterteilung: **27.09.2017**
(21) Anmeldenummer: 09720620.5
(22) Anmeldetag: 27.02.2009
(51) Int. Cl.: B65G 53/48, C10J 3/50, C10J 3/56, B30B 11/24

(54) **BIOMASSE-FÖRDERANLAGE ZUR EINSPEISUNG IN EINEN DRUCKBEHÄLTER**
BIOMASS TRANSPORT INSTALLATION FOR INTRODUCTION INTO A PRESSURISED CONTAINER
DISPOSITIF DE TRANSPORT DE BIOMASSE POUR L'INTRODUCTION DANS UN CONTENANT SOUS PRESSION

(30) Priorität: 01.03.2008 DE 102008012154
(43) Veröffentlichungstag der Anmeldung: 10.11.2010
(73) Patentinhaber: Tetzlaff, Ingrid Lydia, 65779 Kelkheim (Taunus) (DE); Bäßler, Dagmar Judith, 65239 Hochheim (DE); Powell, Corinna Astrid, 81245 München (DE)
(72) Erfinder: TELZLAFF, Karl-Heinz, 65779 Kelkheim (Taunus) (DE)
(74) Vertreter: Cohausz & Florack
(86) Internationale Anmeldenummer: PCT/EP2009/001390
(87) Internationale Veröffentlichungsnummer: WO 2009/112163

(56) Entgegenhaltungen:
- EP-A- 1 312 662
- DE-A1-102006 039 622
- DE-C- 485 696
- FR-A- 2 867 463
- JP-A- 2000 249 317
- US-A- 4 218 222
- US-A- 4 668 130
- US-A- 4 702 177
- US-A- 4 881 862
- US-A1- 2004 076 073
- US-A1- 2006 280 663

## Beschreibung

### Gebiet der Erfindung

Die Erfindung betrifft ein Verfahren und eine Vorrichtung zum Einspeisen von Biomasse in einen Behälter einer Vergasungsanlage zur Erzeugung von Synthesegas mit Hilfe eines Schneckenfördersystems, wobei der Druckbehälter unter Überdruck steht. Eine vorteilhafte Anwendung ist die Zuführung von Biomasse in einen druckaufgeladenen Vergaser zur Herstellung von Synthesegas. Ferner betrifft die Erfindung einen Druckbehälter einer Vergasungsanlage zur Erzeugung von Synthesegas aus Biomasse umfassend eine Vorrichtung zur Einspeisung von Biomasse in den Druckbehälter mit Hilfe eines Schneckenfördersystems.

### Hintergrund und allgemeine Beschreibung der Erfindung

An sich ist es bei Vergasungsanlagen zur Erzeugung von Synthesegas wünschenswert, die Anlagen unter erhöhtem Druck von 2 bis 100 bar, vorzugsweise von 12 bis 40 bar, zu betreiben. Das gilt insbesondere für industrielle Anlagen, bei denen das Synthesegas zu anderen Produkten weiter verarbeitet und das Synthesegas oder seine Folgeprodukte in ein unter Druck stehendes Rohrnetz eingespeist, oder in einer Turbine verbrannt werden sollen.

Biomassevergasungsanlagen mit nennenswertem Überdruck nutzen heute entweder Zellradschleusen oder Druckschleusen, wobei die integrierten Förderschnecken die Biomasse ohne jeglichen Druckgradienten von den Schleusen in die Vergasungsanlage transportieren. Der Stand der Technik ist dokumentiert in: "Analyse und Evaluierung der thermochemischen Vergasung von Biomasse" Schriftenreihe "Nachwachsende Rohstoffe" Band 29, Landwirtschaftsverlag GmbH, Münster (2006). Relevant sind hier die Seiten 54-59 und Tabelle 2-7 auf Seite 72-73. Zudem sind in der US 4 881 862 A ein Verfahren und eine Vorrichtung zur Einspeisung von Biomasse in einen Druckbehälter mit Hilfe von zwei axial hintereinander angeordneten Schneckenförderern beschrieben, deren Drehzahl unabhängig voneinander steuerbar ist. Zwischen den beiden Schneckenförderern ist ein Abschnitt ohne Förderelemente angeordnet, in dem ein annähernd gasdichter Pfropfen aus Biomasse gebildet wird.

Die Standardschneckenförderer, bei denen die Schnecke sich über den gesamten Bereich zwischen Ein- und Ausgang erstreckt, sind in der Regel nur teilweise gefüllt. Das Gas aus einem Druckbehälter kann daher entgegen der Förderrichtung zurück strömen. Selbst bei vollständiger Füllung dieses Schneckenförderers bildet sich durch Verdichtung des Fördergutes ein Hohlraum hinter der Schneckenwendel in dem Gas zurück strömen kann.

Im Forschungszentrum Karlsruhe wurde unter dem Namen "Bioliq" ein Verfahren erarbeitet, das Biomasse in eine pumpfähige Flüssigkeit verwandelt. Das Verfahren wurde unter DE 10 2004 019 203 B3 offenbart. Das Verfahren ermöglicht zwar die Förderung der so hergestellten Flüssigkeit gegen einen hohen Druck. Das wird aber mit einem hohen Aufwand für die Herstellung dieser Flüssigkeit bezahlt.

Auch auf dem verwandten Gebiet der Einbringung von Braunkohle in eine, mit leichtem Überdruck betriebene Wirbelschicht zur Erzeugung von Wärme für ein Dampfkraftwerk, ist keine Übertragung für die Förderung von Biomasse in einen unter Druck stehenden Behälter von mehr als 2 bar ableitbar. Beispiele sind dafür der Rohrkettenförderer, der in DE 198 43 255 A1 offenbart ist, oder der Kolbenförderer, offenbart in OE 44 31 366 A1.

Es ist Aufgabe der Erfindung, sehr unterschiedliche Arten von Biomasse, mit einer einfachen Förderanlage zuverlässig in eine unter Überdruck stehenden Vergasungsanlage zur Erzeugung von Synthesegas einzubringen.

Die Aufgabe wird mit einem Verfahren und einer Vorrichtung gemäß der Ansprüche 1 und 5 gelöst. In den Unteransprüchen werden vorteilhafte Ausgestaltungen der Erfindung beschrieben.

Biomasse ist ein sehr komplexer Rohstoff. Für die thermochemische Vergasung zu Synthesegas sind beispielsweise in Betracht zu ziehen:
- Holz mit unterschiedlichem Wassergehalt und von recht unterschiedlicher Beschaffenheit, beispielsweise Sägespäne und Hackschnitzel,
- Energiepflanzen als Frischmasse, siliert, ausgepresst, getrocknet, grob- oder feinteilig,
- Öl in Mischungen mit fester Biomasse
- Körner und Fasern
- Lebensmittel aller Art und Abfälle aus der Lebensmittelindustrie
- Ausscheidungen aus der Tierhaltung

Die Biomasse soll als homogener Stoff oder in einer möglichst breiten Stoffmischung mit einem Schneckenförderer gegen einen Überdruck gefördert werden.

Es wird eine selbstabdichtende Einspeisung von Biomasse in einen Druckraum erreicht. Es ist vorgesehen, dass zwei Schneckenförderer mit separat steuerbarer Drehzahl seriell hintereinander angeordnet sind. Dadurch kann die Biomasse im Raum zwischen den beiden Schneckenfördern so verdichtet werden, dass ein annähernd gasdichter Pfropfen aus Biomasse gebildet wird. Anders als bei Systemen mit einer Förderschnecke, kann durch das erfindungsgemäße Zweischneckensystem der Druck im Pfropfen durch die Drehzahl der nachgeordneten Schnecke gesteuert werden. Die erfindungsgemäße Vorrichtung ermöglicht große Querschnitte und vermindert dadurch ein Blockieren oder Undichtigkeiten bei der Einbringung von grobstückiger Biomasse. Dadurch ist die Einspeisung von Biomasse mit sehr unterschiedlichen Eigenschaften möglich.

Die beiden Schneckenförderer sind axial hintereinander in einem Rohr angeordnet. Eine Umlenkung des Förderstroms, die für viele Arten von Biomasse problematisch ist, kann damit entfallen.

Die Ausbildung eines abdichtenden Pfropfens wird dadurch erleichtert, dass zwischen den beiden Förderschnecken ein Abschnitt vorgesehen wird, der keine Förderelemente enthält. Damit wird eine längere Dichtstrecke gebildet, die insbesondere für weitgehend trockene Biomasse vorteilhaft ist. Der primäre Schneckenförderer kann auch als Schneckenpresse ausgebildet sein. Das ist dann vorteilhaft, wenn die Biomasse mehr als 50% Wasser enthält.

Einer der Schneckenförderer kann auch als Doppelschneckenförderer ausgebildet sein. Man erreicht damit höhere Drucke und eine Homogenisierung und Zerkleinerung der eingebrachten Biomasse.

Eine Beheizung über das Schneckenrohr und die Schneckenwelle ist vorteilhaft, weil damit die Biomasse leichter plastisch verformbar wird und damit besser abdichtet.

Am Ende der Förderstrecke ist eine Zerteileinrichtung vorteilhaft, welche den Austrag der Biomasse in einen unter Überdruck stehenden Raum erleichtert.

Unteransprüche beschreiben Verfahren, wie man die Biomasse vorbereiten kann, um die Abdichtwirkung des Pfropfens zu verbessern.

### Beschreibung eines Beispiels

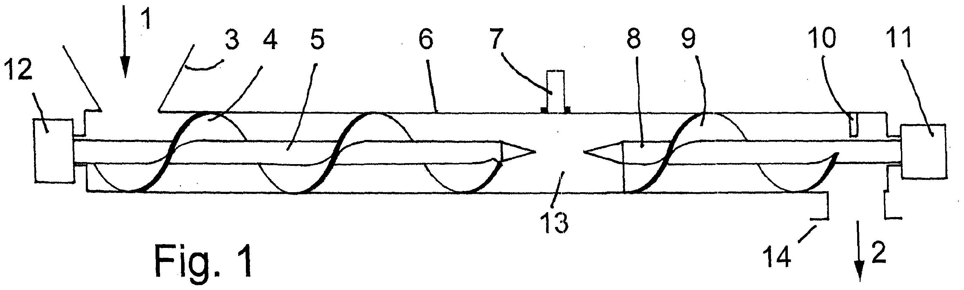

Die Erfindung wird am Beispiel der Fig. 1 näher erläutert.

Die Biomasse 1 wird am Trichter 3 beispielsweise über eine Vorlage mit Zellradschleuse aufgegeben und verlässt am Ausgang 2 die Förderanlage über den Flansch 14, der mit einem unter Überdruck stehenden Behälter oder einer weiteren Förderanlage verbunden ist. Die Biomasse 1 durchläuft zunächst den primären Schneckenförderer, gebildet aus dem Schneckenrohr 6, der Schneckenwelle 5 und der Schneckenwendel 4. Die Biomasse 1 wird dann durch einen Rohrabschnitt 13 geschoben, welcher keine Förderelemente enthält. Der im Rohrabschnitt 13 gebildete Pfropfen aus Biomasse gelangt sodann in den sekundären Schneckenförderer, gebildet aus dem Schneckenrohr 6, der Schneckenwelle 8 und der Schneckenwendel 9. Am Ende der Förderstrecke fällt die Biomasse an den Ausgang 2 in einen unter Überdruck stehenden Raum. Es hat sich als vorteilhaft erwiesen, wenn am Ende der Förderstrecke eine passive oder aktive Zerteileinrichtung 10 angeordnet ist.

Die Drehzahl des primären Schneckenförderers, angetrieben von Motor 12, bestimmt weitgehend die Förderleistung. Die Drehzahl des sekundären Schneckenförderers, der vom Motor 11 angetrieben wird, bestimmt weitgehend die Dichtigkeit der Förderanlage. Der Druck im Rohrabschnitt 13, der mittels Druckaufnehmer 7 gemessen wird, steuert die Drehzahl des sekundären Schneckenförderers, angetrieben vom Motor 11. Dieser Druck korrespondiert mit der Dichtigkeit der Förderanlage. Der beste Wert für den Druck kann in Abhängigkeit von der Art der Biomasse aus einer Gasanalyse des in Spuren zurückströmenden Gases am Aufgabetrichter 3 ermittelt werden. In der Regel wird der Druck im Rohrabschnitt 13 höher sein als der Systemdruck am Flansch 14.

Mit der Erfindung ist es möglich, unterschiedlichste Biomassen in einen Behälter einer Vergasungsanlage einzubringen, die unter einem höheren Druck steht. Das ist für die industrielle thermochemische Vergasung der Biomasse zu Synthesegas von erheblicher wirtschaftlicher Bedeutung.

Nochmals zusammenfassend wird also eine Biomasse-Förderanlage zur Einspeisung in einen Druckbehälter einer Vergasungsanlage vorgeschlagen. Die Einbringung eines heterogenen Feststoffes, wie Biomasse, in einen unter Druck stehenden Behälter ist schwierig. Die bisher genutzten Zellradschleusen und Druckschleusen weisen erhebliche Mängel auf. Die Nutzung von Standardschneckenförderern scheiterte bisher daran, dass sich hinter der Schneckenwendel ein Hohlraum bildete in dem Gas aus dem Druckbehälter entweichen konnte. Diese Unzulänglichkeiten werden dadurch gelöst, dass in einem Schneckenförderrohr 6 zwei unabhängig steuerbaren Schnecken angeordnet sind. Zwischen der von Motor 12 angetriebenen primären Schnecke und der von Motor 11 angetriebenen sekundären Schnecke wird die Biomasse durch hohen Druck infolge unterschiedlicher Drehzahlen der Motoren 11, 12 so verdichtet, dass ein nahezu gasdichter Pfropfen 13 gebildet wird.

## Patentansprüche

1. Verfahren zur Einspeisung von Biomasse (1) in einen Druckbehälter einer Vergasungsanlage zur Erzeugung von Synthesegas mit Hilfe eines Schneckenfördersystems, wobei das Schneckenfördersystem aus mindestens zwei Schneckenförderern (4,5,6,8,9) besteht, wobei die Schneckenförderer (4,5,6,8,9) axial hintereinander angeordnet sind und wobei zwischen den beiden Schneckenförderern (4,5,6,8,9) ein Abschnitt (13) ohne Förderelemente angeordnet ist, wobei der Druck in dem Abschnitt (13) ohne Förderelemente mittels eines Druckaufnehmers (7) gemessen wird und wobei die Drehzahl der Schneckenförderer (4,5,6,8,9) unabhängig voneinander und die Drehzahl des nachgeordneten Schneckenförderers (6, 8, 9) abhängig von dem Druck im Abschnitt (13) ohne Förderelemente so gesteuert wird, dass im Abschnitt (13) ohne Förderelemente ein annähernd gasdichter Pfropfen aus Biomasse (1) gebildet wird.

2. Verfahren nach Anspruch 1,
bei dem eine Mischung von grobteiliger und feinteiliger Biomasse (1) dem Eingang des Schneckenfördersystems zugeführt wird.

3. Verfahren nach Anspruch 1 oder 2,
bei dem die Biomasse (1) mit einer Flüssigkeit angemaischt wird.

4. Verfahren nach einem der vorstehenden Ansprüche 1 bis 3, bei dem die Biomasse (1) vorgewärmt wird.

5. Druckbehälter einer Vergasungsanlage zur Erzeugung von Synthesegas aus Biomasse (1) umfassend eine Vorrichtung zur Einspeisung von Biomasse (1) in den Druckbehälter mit Hilfe eines Schneckenfördersystems, wobei das Schneckenfördersystem aus mindestens zwei Schneckenförderern (4,5,6,8,9) besteht, wobei die Schneckenförderer (4,5,6,8,9) axial hintereinander angeordnet sind, wobei zwischen den beiden Schneckenförderern (4,5,6,8,9) ein Abschnitt (13) ohne Förderelemente angeordnet ist, wobei ein Druckaufnehmer (7) zur Messung des Drucks in dem Abschnitt (13) ohne Förderelemente vorgesehen ist und wobei eine Steuerungseinheit zur Steuerung der Drehzahlen der Schneckenförderer (4,5,6,8,9) unabhängig voneinander und der derart vorgesehen ist, dass abhängig vom Druck im Abschnitt (13) ohne Förderelemente die Drehzahl des nachgeordneten Schneckenförderers (6,8,9) gesteuert wird, so dass im Abschnitt (13) ohne Förderelemente ein annähernd gasdichter Pfropfen aus Biomasse (1) gebildet wird.

6. Druckbehälter nach Anspruch 5,
**dadurch gekennzeichnet, dass**
mindestens ein Schneckenförderer (4,5,6,8,9) beheizbar ist.

## Claims

1. Method for feeding biomass (1) into a pressure vessel of a gasification unit to produce synthesis gas with the aid of a screw conveyor system, wherein the screw conveyor system consists of at least two screw conveyors (4, 5, 6, 8, 9), wherein the screw conveyors (4, 5, 6, 8, 9) are arranged axially in succession and wherein a section (13) without conveyor elements is arranged between the two screw conveyors (4, 5, 6, 8, 9), wherein the pressure in the section (13) without conveyor elements is measured by means of a pressure transducer (7) and wherein the rotational speed of the screw conveyors (4, 5, 6, 8, 9) is controlled independently of each other and the rotational speed of the downstream screw conveyer (6, 8, 9) is controlled dependent upon the pressure in the section (13) without conveyor elements such that an approximately gas-tight plug of biomass (1) is formed in the section (13) without conveyor elements.

2. Method according to claim 1, in which a mixture of coarse and fine biomass (1) is supplied to the inlet of the screw conveyor system.

3. Method according to claim 1 or 2, in which the biomass (1) is mixed with a fluid.

4. Method according to any one of the preceding claims 1 to 3, in which the biomass (1) is preheated.

5. Pressure vessel of a gasification unit for producing synthesis gas from biomass (1) comprising a device for feeding biomass (1) into the pressure vessel with the aid of a screw conveyor system, wherein the screw conveyor system consists of at least two screw conveyors (4, 5, 6, 8, 9), wherein the screw conveyors (4, 5, 6, 8, 9) are arranged axially in succession, wherein a section (13) without conveyor elements is arranged between the two screw conveyors (4, 5, 6, 8, 9), wherein a pressure transducer (7) is provided for measuring the pressure in the section (13) without conveyor elements and wherein a control unit is provided for controlling the rotational speeds of the screw conveyors (4, 5, 6, 8, 9) independently of each other and which is provided such that the rotational speed of the downstream screw conveyer (6, 8, 9) is controlled dependent upon the pressure in the section (13) without conveyor elements such that an approximately gas-tight plug of biomass (1) is formed in the section (13) without conveyor elements.

6. Pressure vessel according to claim 5, **characterised in that** at least one screw conveyor (4, 5, 6, 8, 9) can be heated.

## Revendications

1. Procédé d'alimentation en biomasse (1) dans un contenant sous pression d'une installation de gazéification pour la production de gaz de synthèse à l'aide d'un système de transport à vis sans fin, auquel cas le système de transport à vis sans fin se compose au moins de deux transporteurs à vis sans fin (4, 5, 6, 8, 9), auquel cas les transporteurs à vis sans fin (4, 5, 6, 8, 9) sont agencés axialement l'un après l'autre et auquel cas une section (13) sans éléments de transport est agencée entre les deux transporteurs à vis sans fin (4, 5, 6, 8,9), auquel cas la pression dans la section (13) sans éléments de transport est mesurée au moyen d'un capteur de pression (7) et auquel cas la vitesse de rotation des transporteurs à vis sans fin (4, 5, 6, 8, 9) est commandée indépendamment l'une de l'autre et la vitesse de rotation du transporteur à vis sans fin disposé en aval est commandée en fonction de la pression dans la section (13) sans éléments de transport de telle sorte qu'un bloc essentiellement étanche aux gaz à base de biomasse (1) se forme dans la section (13) sans éléments de transport.

2. Procédé selon la revendication 1, dans lequel l'entrée du système de transport à vis sans fin est alimentée en un mélange de biomasse (1) à grosses et fines particules.

3. Procédé selon la revendication 1 ou 2, dans lequel la biomasse est malaxée avec un fluide.

4. Procédé selon l'une quelconque des revendications de 1 à 3, dans lequel la biomasse est préchauffée.

5. Contenant sous pression d'une installation de gazéification pour la production de gaz de synthèse à partir de biomasse (1) comprenant un dispositif d'alimentation en biomasse (1) dans le contenant sous pression à l'aide d'un système de transport à vis sans fin, auquel cas le système de transport à vis sans fin se compose au moins de deux transporteurs à vis sans fin (4, 5, 6, 8, 9), auquel cas les transporteurs à vis sans fin (4, 5, 6, 8, 9) sont agencés axialement l'un après l'autre, auquel cas une section (13) sans éléments de transport est agencée entre les deux transporteurs à vis sans fin (4, 5, 6, 8, 9), auquel cas l'on prévoit un capteur de pression pour mesurer la pression dans la section (13) sans éléments de transport et auquel cas l'on prévoit une unité de commande pour commander les vitesses de rotation des transporteurs à vis sans fin (4, 5, 6, 8, 9) indépendamment l'une de l'autre et qui est prévue de telle sorte à commander, en fonction de la pression dans la section (13) sans éléments de transport, la vitesse de rotation du transporteur à vis sans fin disposé en aval (6, 8, 9) de telle sorte qu'un bloc essentiellement étanche aux gaz à base de biomasse (1) se forme dans la section (13) sans éléments de transport.

6. Contenant sous pression selon la revendication 5, **caractérisé en ce qu'**au moins un transporteur à vis sans fin (4, 5, 6, 8, 9) est susceptible d'être chauffé.
